# EUROPÄISCHE PATENTSCHRIFT

(11) **EP 2 803 954 B1**
(45) Veröffentlichungstag und Bekanntmachung des Hinweises auf die Patenterteilung: **02.01.2019**
(21) Anmeldenummer: 13167856.7
(22) Anmeldetag: 15.05.2013
(51) Int. Cl.: G01F 23/296

(54) **Füllstandmessvorrichtung**
Fill level measurement device
Dispositif de mesure de niveau de remplissage

(43) Veröffentlichungstag der Anmeldung: 19.11.2014
(73) Patentinhaber: VEGA Grieshaber KG, 77709 Wolfach (DE)
(72) Erfinder: Gruhler, Holger, 78609 Tuningen (DE)
(74) Vertreter: Westphal, Mussgnug & Partner Patentanwälte mbB

(56) Entgegenhaltungen:
- DE-A1-102004 033 311
- DE-A1-102007 041 349
- DE-A1-102008 043 764
- DE-C2- 10 023 302

## Beschreibung

Die Erfindung betrifft eine Füllstandmessvorrichtung mit einer Membran und einer diese Membran antreibenden Antriebseinheit, wobei regelmäßig an der Membran Schwingstäbe angeformt sind.

Solche Füllstandmessvorrichtungen sind beispielsweise aus dem deutschen Patent DE 100 23 302 C2 bekannt. Als Antriebseinheit dient ein Stapel von piezo-elektrischen Elementen mit einem Zugbolzen zum Antreiben der piezo-elektrischen Elemente. Der Stapel von piezo-elektrischen Elementen ist dabei zwischen einem Vorspannelement, insbesondere einer Vorspannmutter, und einem die Membran berührenden Druckring angeordnet. Obwohl solche Füllstandmessvorrichtung ausgezeichnet geeignet sind, Füllstände zu erfassen, besteht ein Nachteil dieser Antriebsart darin, dass der vorgespannte Antriebsstapel aus piezo-elektrischen Elementen bei einem positiven Prozessdruck (Überdruck) aufgrund der sich durchbiegenden Membran und des außermittig aufliegenden Druckrings entlastet wird. Daraus folgt bei zunehmendem Prozessdruck eine geringere mechanische Kopplung der piezo-elektrischen Elemente. Eine solche geringe mechanische Kopplung führt zu geringer werdenden elektrischen Amplituden, die sogar zum völligen Ausfall der Antriebseinheit führen können. Dieser Effekt kann zwar durch Anlegen einer höheren Vorspannung an den piezo-elektrischen Elementen ausgeglichen werden, allerdings nur bis zu einem begrenzten Umfang, da die einzelnen piezo-elektrischen Elemente zum einen eine mechanische Belastungsgrenze aufweisen sodass eine erhöhte Bruchgefahr bei zu hoher Vorspannung besteht und zum anderen unter zu großem Druck eine Depolarisierung erfahren. Problematisch ist ferner, dass die Membran mit größerer Vorspannung der Antriebseinheit eine strukturmechanische Versteifung erfährt.

Um diesen Nachteil zu vermeiden, also eine Entlastung des Stapels unter einem positiven Prozessdruck zu umgehen, werden von der Anmelderin zwischenzeitlich auch Vibrationsgrenzschalter mit geschraubten, piezo-elektrischem Antrieb vertrieben, wobei sich der Antrieb an einen an der Rohrwandung des Gehäuses der Füllstandmessvorrichtung befestigten Zwischenboden abstützt. Solche Füllstandmessvorrichtungen sind beispielsweise in der DE 10 2007 041 349 A1, offenbart. Der in dieser Füllstandmessvorrichtung vorhandene Bolzen funktioniert hier nicht mehr als Zugbolzen, sondern als Druckbolzen. Dieser Druckbolzen ist an seinem der Membran zugewandten Ende feststehend mit dem erwähnten Zwischenboden in Verbindung und an seinem oberen Ende mit einem Vorspannelement, insbesondere einer Vorspannmutter, versehen, durch welche der Stapel aus piezo-elektrischen Elementen gegen ein durch den Zwischenboden greifendes Druckstück in Richtung Mitte der Membran gedrückt werden kann. Eine solche Anordnung der Füllstandmessvorrichtung hat den Vorteil, dass die gesamte Antriebseinheit durch einen positiven Prozessdruck belastet wird. Dabei nimmt die elektrische Amplitude also mit zunehmendem Druck nicht ab, wie es bei den eingangs genannten Füllstandmessvorrichtungen der Fall ist.

Bei dieser zweiten Antriebsart ist es jedoch nachteilig, dass jetzt bei einem negativen Prozessdruck (Unterdruck) der Stapel von piezo-elektrischen Elementen entlastet wird. Da die Antriebsseite der Membran in der Regel unter Atmosphärendruck liegt, ist die Höhe eines negativen Prozessdruckes physikalisch zwar auf -1 Bar begrenzt. Geht man jedoch von dünnen Membranen aus, was zum Beispiel bei einer Verkleinerung der Füllstandmessvorrichtung zwangsläufig notwendig wäre, kann auch dieser Druck bereits zu einer Antriebsentlastung führen. Auch bei Anwendungen mit höheren Temperaturen kann eine solche Antriebsentlastung eintreten, da hier eine zusätzliche Entlastung aus der axialen Bolzenausdehnung resultiert.

Die Erfindung hat das Ziel, eine Füllstandmessvorrichtung anzugeben, die die bei den vorbekannten Füllstandmessvorrichtungen auftretenden Nachteile wirksam vermeidet. Dabei soll die aufzufindende Füllstandmessvorrichtung so gestaltet sein, dass sowohl bei positiven als auch negativen Prozessdrücken eine ausreichend hohe elektrische Signalamplitude geliefert wird und somit die gesamte Anordnung funktionsfähig bleibt.

Diese Aufgabe wird durch eine Füllstandmessvorrichtung mit den Merkmalen des Anspruchs 1 gelöst.

Vorteilhafte Weiterbildungen einer solchen Füllstandmessvorrichtung sind in den Unteransprüchen angegeben.

Die grundlegende Idee der vorliegenden Erfindung besteht also darin, die vorbekannten Antriebskonzepte mit Zugbolzen und Druckbolzen miteinander zu kombinieren, und zwar derart, dass beide Antriebskonzepte mechanisch in Serie geschaltet sind. Das führt dazu, dass sowohl bei positiven als auch negativen Prozessdrücken immer einer der beiden Antriebseinheiten mechanisch belastet und ein anderer mechanisch entlastet wird. Damit steht also immer ein funktionsfähiger Antrieb zur Verfügung.

So könnte beispielsweise bei einem positiven Prozessdruck diejenige Antriebseinheit ausfallen, die bei einem äußeren positiven Druck entlastet wird, also die Antriebseinheit mit Druckbolzen. In diesem Fall wird aber die Antriebseinheit mit dem Zugbolzen stärker belastet und damit bleibt die gesamte Messvorrichtung funktionsfähig.

Im umgekehrten Fall, also bei auftretendem negativen Prozessdruck, bleibt dagegen die erste Antriebseinheit mit Zugbolzen in Funktion und die zweite Antriebseinheit mit dem Druckbolzen kann ausfallen. Insgesamt bleibt der Antrieb trotzdem funktionsfähig.

Elektrisch können die beiden Antriebseinheiten gemeinsam und damit parallel an einer Steuerelektronik betrieben werden, so dass die additive Amplitude der beiden Antriebseinheiten über einen weiteren Druckbereich immer ausreichend groß ist.

Es liegt aber auch im Rahmen der Erfindung, dass die beiden Antriebseinheiten getrennt mit verschiedenen Steuerschaltungen betrieben werden, wobei dann deren Ergebnisse lediglich noch logisch verknüpft werden müssen.

Gemäß der vorliegenden Erfindung ist es lediglich notwendig, die erste Antriebseinheit und die zweite Antriebseinheit mechanisch in Serie zu schalten. Dies kann entweder dadurch geschehen, dass die erste Antriebseinheit oberhalb der zweiten Antriebseinheit, die zweite Antriebseinheit oberhalb der ersten Antriebseinheit oder beide Antriebseinheiten zueinander koaxial angeordnet sind.

Details der Erfindungen und weitere Vorteile werden nachfolgend im Zusammenhang mit näheren Figuren erläutert. Dabei zeigen:
- Figur 1: den prinzipiellen Aufbau in Schnittansicht einer bekannten Füllstandmessvorrichtung mit einer Antriebseinheit und Zugbolzen,
- Figur 2: den prinzipiellen Aufbau in Schnittansicht einer bekannten Füllstandmessvorrichtung mit einer Antriebseinheit und Druckbolzen sowie zugehörenden Zwischenboden,
- Figur 3: ein erstes Ausführungsbeispiel einer Füllstandmessvorrichtung nach der Erfindung, bei der die zweite Antriebseinheit gemäß Figur 2 oberhalb der ersten Antriebseinheit gemäß Figur 1 angeordnet ist,
- Figur 4: ein zweites Ausführungsbeispiel einer Füllstandmessvorrichtung nach der Erfindung, bei welcher die aus Figur 1 bekannte Antriebseinheit oberhalb der aus Figur 2 bekannten Antriebseinheit angeordnet ist, und
- Figur 5: ein drittes Ausführungsbeispiel der Erfindung, bei welcher die erste und zweite Antriebseinheit zueinander koaxial angeordnet sind.

In den nachfolgenden Figuren bezeichnen, sofern nicht anders angegeben, gleiche Bezugszeichen gleiche Teile mit gleicher Bedeutung.

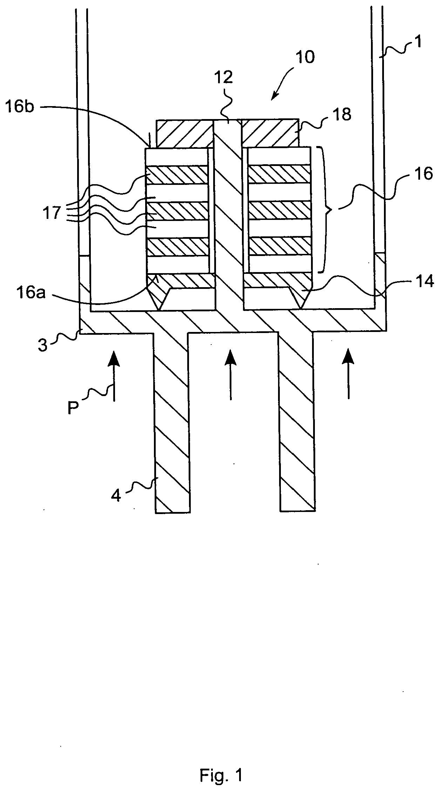

Figur 1 zeigt den prinzipiellen Aufbau einer bekannten Füllstandmessvorrichtung mit einer Antriebseinheit und Zugbolzen in Schnittansicht. Eine solche Füllstandmessvorrichtung ist beispielsweise aus DE 100 23 302 C2 bekannt, so dass deshalb im Zusammenhang mit Figur 1 nur auf die wesentlichen Komponenten dieser Füllstandmessvorrichtung eingegangen werden muss.

Die Vorrichtung verfügt über ein zylinderförmiges Gehäuse 1, welches an seinem Boden mit einer Membran 3 abgeschlossen ist. Die Membran steht vorzugsweise an einer dem Topfinneren des Gehäuses 1 abgewandten Seite mit zwei Gabelzinken 4 in bekannter Art und Weise in Verbindung. Im Inneren des Gehäuses 1 befindet sich eine erste Antriebseinheit 10, welche vorliegend einen Zugbolzen 12 aufweist, der mit seinem unteren Ende einstückig im Zentrum der Membran 3 festgelegt ist. Um den Zugbolzen 12 herum ist ein erster Stapel 16 von Piezo-Elementen 17 angeordnet. Die einzelnen piezo-elektrischen Elemente 17 berühren dabei auf ihrer koaxialen Innenseite vorzugsweise den Zugbolzen 12 nicht. Der erste Stapel 16 aus piezo-elektrischen Elementen 17, die selbstverständlich auch durch andere, geeignete Antriebselemente ersetzt sein können, weist eine untere, zur Membran 3 hin zugewandte Bodenseite 16a und eine gegenüberliegende Oberseite 16b auf. Zwischen der Bodenseite 16a und der Membran 3 befindet sich ein erstes Druckstück 14, über welches ringförmig der gesamte erste Stapel 16 auf der Oberseite der Membran 3 aufsitzt. An dem oberen, freien Ende des Zugbolzens 12 befindet sich ein erstes Vorspannelement 18, vorliegend eine Vorspannschraube, über welche gegen die Oberseite 16b und damit den gesamten ersten Stapel beim Verdrehen des Vorspannelementes 18 Druck ausgeübt werden kann, so dass eine Vorspannung gegen die Membran 3 einstellbar ist.

Eine solche Füllstandmessvorrichtung wird bevorzugt als Vibrationsgrenzstandssensor eingesetzt und ist hierfür auch bestens geeignet. Allerdings zeigt sich, dass bei einem positiven Prozessdruck (Überdruck) im Bereich der Gabelzinken 4 sich die Membran 3 durch diesen positiven Prozessdruck nach oben in das Innere des Gehäuses 1 und damit in Richtung erste Antriebseinheit 10 durchbiegt. Dieser positive Prozessdruck ist in Figur 1 durch die Pfeile P in Richtung Membran 3 angedeutet. Ein solcher positiver Prozessdruck mit der damit verbundenen Durchbiegung der Membran 3 kann bei zunehmendem Prozessdruck zu einer geringeren mechanischen Kopplung der piezo-elektrischen Elemente 17 führen, was ungewollt ist.

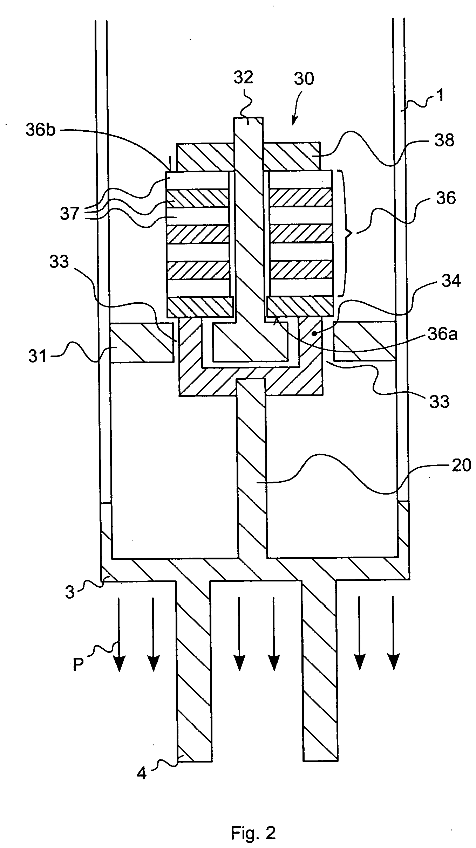

In Figur 2 ist eine zweite Füllstandmessvorrichtung dargestellt, wie sie an sich bekannt und beispielsweise in der DE 10 2007 041 349 A1 auch detailliert beschrieben ist. Bei einem positiven Prozessdruck wird, wie die Pfeile in Figur 2 andeuten, die Membran 3 nicht in das Innere des Gehäuses 1 verbogen, sondern in Richtung Gabelzinken 4.

Der grundsätzliche Aufbau dieser bekannten Füllstandmessvorrichtung weist wiederum ein topfförmiges Gehäuse 1 auf, an dessen Unterseite die Membran 3 mit Gabelzinken 4 mechanisch feststehend angebunden ist. Das Zentrum der Membran ist im Inneren des Gehäuses mit einem Bolzenstück 20, das sich in das Gehäuse 1 erstreckt, versehen. Am oberen Ende dieses Bolzenstückes 20 ist eine zweite Antriebseinheit 30 angekoppelt, wobei hierfür ein Zwischenbodenteil 31 vorzugsweise orthogonal zu den Wandungen des Gehäuses 1 vorgesehen ist. In diesem Zwischenbodenteil 31 sind Öffnungen 33 vorgesehen, durch welche ein U-förmig gestaltetes Druckstück 34 greift, welches mit seiner Unterseite am oberen Ende des Bolzenstückes 20 festgelegt ist. Auf der Oberseite des zweiten Druckstückes 34 sitzt ein Stapel 36 aus piezo-elektrischen Elementen 37. Dieser Stapel 36 mit seinen piezo-elektrischen Elementen 37 ist wiederum koaxial um einen Bolzen, hier allerdings einen Druckbolzen 32, angeordnet. Dieser Druckbolzen 32 ist an seinem unteren Ende mittig an dem Zwischenbodenteil 31 befestigt. Am oberen Ende dieses Druckbolzens 32 befindet sich wiederum ein Vorspannelement 38, das bevorzugt eine Vorspannmutter oder eine Vorspannschraube ist, über welche die Oberseite 36b des Stapels 36 aus piezo-elektrischen Elementen 37 gegen das zweite Druckstück 34 gedrückt werden kann. Der Stapel 36 aus piezo-elektrischen Elementen 37 liegt hierfür mit seiner Bodenseite 36a auf dem Druckstück 34 auf.

Der Bolzen 32 fungiert bei dieser bekannten Füllstandmessvorrichtung jetzt nicht als Zugbolzen, wie in der Anordnung von Figur 1, sondern als Druckbolzen.

Bei dieser bekannten Füllstandmessvorrichtung, die ebenfalls bevorzugt als Vibrationsgrenzstandssensor eingesetzt wird, ist zwar im Zusammenhang mit Figur 1 beschriebene Nachteil vermieden. Allerdings ist es so, dass bei negativem Prozessdruck (Unterdruck) der Stapel 36 aus piezo-elektrischen Elementen 37 entlastet wird und insoweit ein Nachteil besteht.

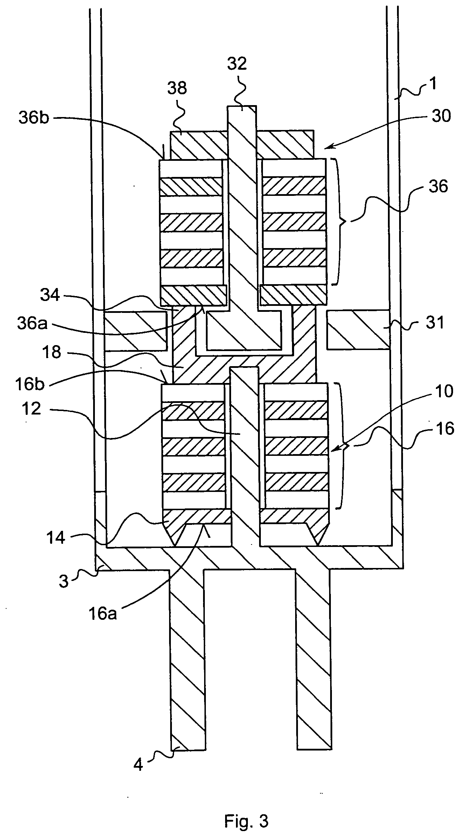

In Figur 3 ist ein erstes Ausführungsbeispiel einer Füllstandmessvorrichtung nach der Erfindung dargestellt, bei welchem wiederum eine Membran 3 mit Gabelzinken 4 und ein Gehäuse 1 vorgesehen ist. Allerdings wird bei dieser Füllstandmessvorrichtung nach der Erfindung das Konzept der Antriebseinheiten aus den zuvor beschriebenen Füllstandmessvorrichtungen miteinander kombiniert. Dies bedeutet, dass im Inneren des Gehäuses eine erste Antriebseinheit 10 mit einem mit der Membran 3 gekoppelten Zugbolzen 12 vorgesehen ist und auch eine zweite Antriebseinheit 30 mit einem mit der Membran 3 gekoppelten Druckbolzen 32. Dabei sind die erste Antriebseinheit 10 und die zweite Antriebseinheit 30 zueinander mechanisch in Serie geschaltet. Im Ausführungsbeispiel von Figur 3 ist hierfür die in Zusammenhang mit Figur 2 erläuterte Füllstandmessvorrichtung oberhalb der aus Figur 1 dargestellten Füllstandmessvorrichtung platziert. Die bereits bekannten Bezugszeichen stehen für die gleichen Teile weiter.

Eine besondere konstruktive Ausgestaltung ergibt sich dadurch, dass das obere Ende des Zugbolzens 12 jetzt zwar noch mit dem ersten Vorspannelement 18, also einer Vorspannschraube, in Verbindung steht. Dieses erste Vorspannelement 18 fungiert jedoch gleichzeitig auch als zweites Druckstück 34. Hierfür ist das zweite Druckstück 34 mit dem ersten Vorspannelement 18 feststehend verbunden.

Die in Figur 3 dargestellte Anordnung einer Füllstandmessvorrichtung ist wiederum bevorzugt als Vibrationsgrenzstandssensor einsetzbar und hat den großen Vorteil, dass sowohl bei positiven als auch negativen Prozessdrücken eine ausreichende elektrische Amplitude geliefert wird und damit die gesamte Anordnung funktionstüchtig bleibt. Sowohl bei positiven als auch bei negativen Prozessdrücken ist immer einer der beiden Stapel 16, 36 mechanisch belastet und der andere Stapel 36, 16 mechanisch entlastet. Es steht also immer eine funktionsfähige Antriebseinheit 10 beziehungsweise 30 zur Verfügung. Bei einem positiven Prozessdruck wird zwar die untere Antriebseinheit 10 entlastet, was bis zum Funktionsausfall der ersten Antriebseinheit 10 führen kann. Allerdings ist der darüber befindliche zweite Stapel 36 aus piezo-elektrischen Elementen 37 belastet, so dass die zweite Antriebseinheit 30 auf jeden Fall funktionstüchtig bleibt.

Tritt dagegen ein negativer Prozessdruck auf, wird die erste Antriebseinheit 10 belastet und bleibt damit in Funktion, während die zweite Antriebseinheit 30 zwar entlastet wird und auch ausfallen kann. Die gesamte Antriebseinheit bleibt trotzdem funktionsfähig, weil bei Ausfall einer der beiden Antriebseinheiten 10, 30 gemäß dem konstruktiven Aufbau der mechanischen in-Serie-Schaltung auf jeden Fall ein weiterer, redundanter Antrieb zur Verfügung steht. Elektrisch können die beiden Antriebseinheiten 10, 30 gemeinsam, also parallel, an einer gemeinsamen Steuerelektronik betrieben werden, so dass die additive Amplitude der beiden Antriebseinheiten 10, 30 über einen weiten Druckbereich immer ausreichend groß ist. Allerdings ist es auch möglich, die beiden Antriebseinheiten 10, 30 mit separaten Steuereinheiten zu betreiben. Es müssen dann die Ausgangssignale der Antriebseinheiten 10, 30 nur entsprechend logisch miteinander verknüpft werden.

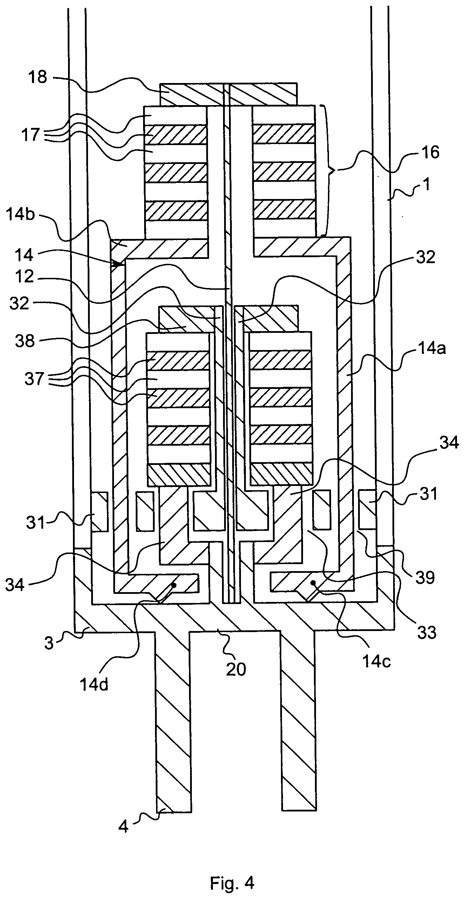

Das Ausführungsbeispiel von Figur 4 zeigt ein zweites Ausführungsbeispiel einer Füllstandmessvorrichtung nach der vorliegenden Erfindung. Allerdings befindet sich jetzt die mit dem Zugbolzen 12 befindliche erste Antriebseinheit 10 oberhalb der zweiten Antriebseinheit 30 mit dem Druckbolzen 32. Die zweite Antriebseinheit 30 ist, ähnlich wie in Figur 2 dargestellt, an die Membran 3 angebunden. Allerdings verfügt das Zwischenbodenteil 31 neben den Öffnungen 33 für das zweite Druckstück 34 über weitere Öffnungen 39, um Wandungsabschnitte 14a des ersten Druckstückes 14 in noch zu erläuternder Art und Weise aufzunehmen. Des Weiteren ist im Unterschied zur Darstellung von Figur 2 sowohl das Bolzenstück 20 als auch der Druckbolzen 32 als Hohlwandrohr ausgebildet, damit durch dieses der Zugbolzen 12 der ersten Antriebseinheit 10, die in diesem Ausführungsbeispiel oberhalb der zweiten Antriebseinheit 30 sitzt, greifen kann. Dieser Zugbolzen 12 ist mit seinem unteren Ende zentrisch an der Oberseite der Membran 3 festgelegt und durchragt das Bolzenstück 20 und den Druckbolzen 32. An seinem oberen Ende ist dieser Zugbolzen 12 wiederum mit einem ersten Vorspannelement 18, vorzugsweise eine Vorspannmutter, in Verbindung, um den ersten Stapel 16 aus piezo-elektrischen Elementen 17 über das besonders gestaltete erste Druckstück 14 gegen die Membran 3 zu drücken.

Das erste Druckstück 14 verfügt über parallel zum Gehäuse 1 verlaufende Wandabschnitte 14a, welche die zweite Antriebseinheit 30 umgreifen und an ihrem oberen Ende von einem plattenförmigen Element 14b absinkt, auf welchem der Stapel 16 aus piezo-elektrischen Elementen 17 aufsitzt. An ihrem unteren Ende sind die Wandabschnitte 14a, die durch die erwähnten Öffnungen 39 im Zwischenbodenteil 31 greifen, wiederum von einem Element, das allerdings ringförmig ausgebildet ist, abgeschlossen. Dieses ringförmige Element ist mit dem Bezugszeichen 14c bezeichnet. Die zentrische Öffnung dieses ringförmigen Elementes 14c umgreift das Bolzenstück 20 und verfügt an ihrer zur Membran 3 zugewandten Seite über einen im Schnitt konisch sich zuspitzenden Druckringabschnitt 14d, über welchen bei entsprechender Vorspannung des ersten Vorspannelementes 18 entsprechend Druck auf die Oberseite der Membran 3 ausgeübt werden kann.

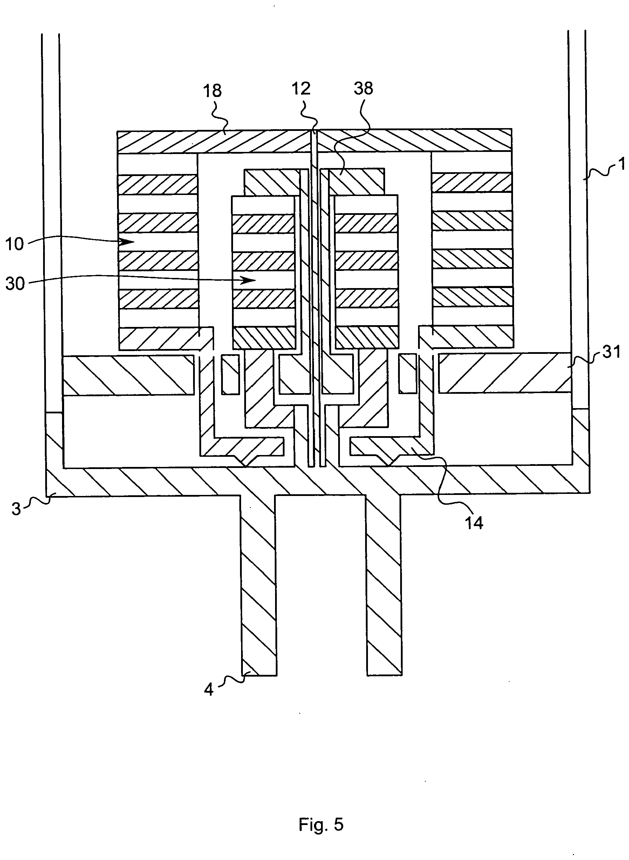

Bei der in Figur 4 dargestellten Anordnung befindet sich also die erste Antriebseinheit 10 mit dem Zugbolzen 12 oberhalb der zweiten Antriebseinheit 30 mit dem Druckbolzen 32. Schließlich zeigt Figur 5 noch ein drittes Ausführungsbeispiel einer erfindungsgemäßen Füllstandmessvorrichtung. Bei dieser Füllstandmessvorrichtung sind die erste Antriebseinheit 10 und die zweite Antriebseinheit 30 koaxial zueinander platziert. Die Anordnung entspricht weitgehend der Anordnung von Figur 4. Allerdings sind jetzt die einzelnen piezo-elektrischen Elemente der ersten Elemente 17 des ersten Stapels 16 der ersten Antriebseinheit 10 so gestaltet, dass diese koaxial um die zweite Antriebseinheit 30 herum angeordnet werden können. Das erste Vorspannelement 18 muss in seinem Durchmesser entsprechend groß ausgeführt sein.

Auch bei dieser Anordnung ist es so, dass eine Füllstandmessvorrichtung bereitgestellt wird, mit einer Membran 3, bei der die erste Antriebseinheit 10 mit einem mit der Membran 3 gekoppelten Zugbolzen 12 sowie eine zweite Antriebseinheit mit einem mit der Membran 3 gekoppelten Druckbolzen zur Verfügung gestellt wird. Die erste Antriebseinheit 10 und die zweite Antriebseinheit 30 sind hierbei ebenfalls mechanisch in Serie geschaltet.

### Bezugszeichenliste

- 1: Gehäuse
- 3: Membran
- 4: Gabelzinken

- 10: erste Antriebseinheit
- 12: Zugbolzen
- 14: erstes Druckstück
- 14a: Wandabschnitte
- 14b: plattenförmiges Element
- 14c: ringförmiges Element
- 14d: Druckringabschnitt
- 16: erster Stapel
- 16a: Bodenseite
- 16b: Oberseite
- 17: piezo-elektrische Elemente
- 18: erstes Vorspannelement

- 20: Bolzenstück

- 30: zweite Antriebseinheit
- 31: Zwischenbodenteil
- 32: Druckbolzen
- 33: Öffnungen im Zwischenbodenteil
- 34: zweites Druckstück
- 36: zweiter Stapel
- 36a: Bodenseite
- 36b: Oberseite
- 37: piezo-elektrische Elemente
- 38: zweites Vorspannelement
- 39: Öffnung

## Patentansprüche

1. Füllstandmessvorrichtung mit folgenden Merkmalen:
- eine Membran (3),
- eine erste Antriebseinheit (10) mit einem mit der Membran (3) gekoppelten ersten Bolzen (12), wobei die erste Antriebseinheit (10) einen ersten Stapel mit piezo-elektrischen Elementen (17), welche bodenseitig über ein außermittig an der Membran (3) angreifendes erstes Druckstück (14) mit der Membran (3) mechanisch gekoppelt sind, aufweist, wobei der erste Bolzen (12) mittig feststehend auf der Membran (3) angeordnet ist, den ersten Stapel (16) durchgreift und über ein erstes Vorspannelement (18) deckelseitig gegen den ersten Stapel (16) gespannt ist,
- eine zweite Antriebseinheit (30) mit einem mit der Membran (3) gekoppelten zweiten Bolzen (32), wobei die zweite Antriebseinheit (30) einen zweiten Stapel (36) mit piezo-elektrischen Elementen (37), welcher bodenseitig über ein mittig an der Membran (3) angreifendes, zweites Druckstück (34) mit der Membran (3) mechanisch gekoppelt ist, aufweist, wobei der zweite Bolzen (32) feststehend mit einem in der Füllstandmessvorrichtung feststehendem Zwischenbodenteil (31) in Verbindung ist, den zweiten Stapel (36) durchgreift und über ein zweites Vorspannelement (38) deckelseitig gegen den zweiten Stapel (36) gespannt ist und
- die erste Antriebseinheit (10) und die zweite Antriebseinheit (30) sind zueinander mechanisch in Serie geschaltet.

2. Füllstandmessvorrichtung nach Anspruch 1,
**dadurch gekennzeichnet, dass** der zweite Stapel (36) oberhalb des ersten Stapels (16) sitzt.

3. Füllstandmessvorrichtung nach Anspruch 2,
**dadurch gekennzeichnet, dass** das zweite Druckstück (34) mit dem ersten Vorspannelement (18) mechanisch feststehend verbunden ist.

4. Füllstandmessvorrichtung nach einem der vorhergehenden Ansprüche,
**dadurch gekennzeichnet, dass** das zweite Druckstück (34) das Zwischenbodenteil (31) durchgreift oder übergreift.

5. Füllstandmessvorrichtung nach einem der vorhergehenden Ansprüche,
**dadurch gekennzeichnet, dass**
das Zwischenbodenteil (31) als Zwischenbodenplatte ausgebildet ist und am Gehäuse (1) oder an einem mit dem Gehäuse feststehenden Teil der Füllstandmessvorrichtung befestigt ist.

6. Füllstandmessvorrichtung nach Anspruch 1,
**dadurch gekennzeichnet, dass**
der erste Stapel (16) oberhalb des zweiten Stapels (36) sitzt.

7. Füllstandmessvorrichtung nach Anspruch 6,
**dadurch gekennzeichnet, dass** das erste Druckstück (14) den zweiten Stapel (36) übergreift.

8. Füllstandmessvorrichtung nach einem der Ansprüche 1 bis 6,
**dadurch gekennzeichnet, dass** der erste Bolzen (12) und der zweite Bolzen (32) zumindest abschnittsweise koaxial zueinander angeordnet sind.

9. Füllstandmessvorrichtung nach Anspruch 1,
**dadurch gekennzeichnet, dass** der erste Stapel (16) und der zweite Stapel (36) zueinander koaxial angeordnet sind.

## Claims

1. Fill level measuring device comprising the following features:
- a membrane (3),
- a first drive unit (10) with a first bolt (12) coupled to the membrane (3), wherein the first drive unit (10) comprises a first stack with piezoelectric elements (17), which is mechanically coupled on the bottom side to the membrane (3) via a first pressure piece (14) that engages the membrane (3) off-center, wherein the first bolt (12) is disposed centrally fixed on the membrane (3), reaches through the first stack (16) and is tensioned against the first stack (16) via a first preload element (18) on the cover side,
- a second drive unit (30) with a second bolt (32) coupled to the membrane (3), wherein the second drive unit (30) comprises a second stack (36) with piezo-electric elements (37), which is mechanically coupled on the bottom side to the membrane (3) via a second pressure piece (34) that engages the membrane (3) centrally, wherein the second bolt (32) is fixedly connected to an intermediate bottom part (31) fixed in the fill level measuring device, reaches through the second stack (36) and is tensioned against the second stack (36) via a second preload element (38) on the cover side, and
- the first drive unit (10) and the second drive unit (30) are mechanically connected to one another in series.

2. Fill level measuring device according to claim 1,
**characterized in that**
the second stack (36) sits above the first stack (16).

3. Fill level measuring device according to claim 2,
**characterized in that**
the second pressure piece (34) is mechanically fixed to the first preload element (18).

4. Fill level measuring device according to one of the preceding claims,
**characterized in that**
the second pressure piece (34) reaches through or reaches over the intermediate bottom part (31).

5. Fill level measuring device according to one of the preceding claims,
**characterized in that**
the intermediate bottom part (31) is configured as an intermediate bottom plate and is attached to the housing (1) or to a part of the filling fill level measuring device fixed to the housing.

6. Fill level measuring device according to Claim 1,
**characterized in that**
the first stack (16) sits above the second stack (36).

7. Fill level measuring device according to Claim 6,
**characterized in that**
the first pressure piece (14) reaches over the second stack (36).

8. Fill level measuring device according to one of Claims 1 to 6,
**characterized in that**
the first bolt (12) and the second bolt (32) are arranged at least in sections to be coaxial to one another.

9. Fill level measuring device according to Claim 1,
**characterized in that**
the first stack (16) and the second stack (36) are coaxially arranged to one another.

## Revendications

1. Dispositif de mesure de niveau de remplissage avec les caractéristiques suivantes :
- une membrane (3),
- une première unité d'entraînement (10) avec un premier boulon (12) couplé à la membrane (3), la première unité d'entraînement (10) comprenant un premier empilement avec des éléments piézo-électriques (17), lesquels sont couplés mécaniquement à la membrane (3), côté fond, via une première pièce de pression (14) engageant la membrane (3) de manière excentrée, le premier boulon (12) étant monté sur la membrane (3) de manière fixe et centrée, venant en prise avec le premier empilement (16) et étant mis sous tension contre le premier empilement (16), côté couvercle, via un premier élément de précontrainte (18),
- une seconde unité d'entraînement (30) avec un second boulon (32) couplé à la membrane (3), la seconde unité d'entraînement (30) comprenant un second empilement (36) avec des éléments piézo-électriques (37), lesquels sont couplés mécaniquement à la membrane (3), côté fond, via une seconde pièce de pression (34) engageant la membrane (3) de manière centrée, le second boulon (32) étant en contact de manière fixe avec une partie de fond intermédiaire (31) fixée dans le dispositif de mesure de niveau de remplissage, venant en prise avec le second empilement (36) et étant mis sous tension contre le second empilement (36), côté couvercle, via un second élément de précontrainte (38), et
- la première unité d'entraînement (10) et la seconde unité d'entraînement (30) sont montées mécaniquement en série l'une par rapport à l'autre.

2. Dispositif de mesure de niveau de remplissage selon la revendication 1,
**caractérisé en ce que**
le second empilement (36) est placé au-dessus du premier empilement (16).

3. Dispositif de mesure de niveau de remplissage selon la revendication 2,
**caractérisé en ce que**
la seconde pièce de pression (34) est reliée mécaniquement de manière fixe au premier élément de précontrainte (18).

4. Dispositif de mesure de niveau de remplissage selon l'une des revendications précédentes,
**caractérisé en ce que**
la seconde pièce de pression (34) vient en prise avec ou vient en prise sur la partie de fond intermédiaire (31) .

5. Dispositif de mesure de niveau de remplissage selon l'une des revendications précédentes,
**caractérisé en ce que**
la partie de fond intermédiaire (31) est une plaque de fond intermédiaire et est attachée au boîtier (1) ou à une partie du dispositif de mesure de niveau de remplissage fixée au boîtier.

6. Dispositif de mesure de niveau de remplissage selon la revendication 1,
**caractérisé en ce que**
le premier empilement (16) est placé au-dessus du second empilement (36).

7. Dispositif de mesure de niveau de remplissage selon la revendication 6,
**caractérisé en ce que**
la première pièce de pression (14) vient en prise sur le second empilement (36).

8. Dispositif de mesure de niveau de remplissage selon l'une des revendications 1 à 6,
**caractérisé en ce que**
le premier boulon (12) et le second boulon (32) sont placés au moins par portions de manière coaxiale l'un par rapport à l'autre.

9. Dispositif de mesure de niveau de remplissage selon la revendication 1,
**caractérisé en ce que**
**dadurch gekennzeichnet, dass** le premier empilement (16) et le second empilement (36) sont placés de manière coaxiale l'un par rapport à l'autre.
